# FASCICULE DE BREVET EUROPEEN

(11) **EP 2 176 759 B1**
(45) Date de publication et mention de la délivrance du brevet: **10.07.2019**
(21) Numéro de dépôt: 08826613.5
(22) Date de dépôt: 11.07.2008
(51) Int. Cl.: G06F 11/34, G06Q 10/00, H04L 29/08

(54) **PROCEDE DE MESURE DES PERFORMANCES D'UN SERVEUR CIBLE LOGEANT UN OUTIL DE SUIVI DYNAMIQUE**
VERFAHREN ZUR MESSUNG DER LEISTUNG EINES ZIELSERVERS MIT EINEM DYNAMISCHEN ORTUNGS-TOOL
METHOD FOR MEASURING THE PERFORMANCE OF A TARGET SERVER HOUSING A DYNAMIC TRACKING TOOL

(30) Priorité: 13.07.2007 FR 0756501
(43) Date de publication de la demande: 21.04.2010
(73) Titulaire: InfoVista SAS, 91300 Massy (FR)
(72) Inventeur: BOUCHEX BELLOMIÉ, Sébastien, F-92170 Vanves (FR)
(74) Mandataire: IPAZ
(86) Numéro de dépôt international: PCT/FR2008/051325
(87) Numéro de publication internationale: WO 2009/013429

(56) Documents cités:
- WO-A-00/14617
- WO-A-00/75814
- US-A1- 2003 145 079

## Description

La présente invention concerne un procédé de mesure des performances et de suivi de la qualité de service d'un système d'information. Elle concerne en particulier l'accès à des données de performances d'un serveur distant.

La complexité croissante des systèmes d'information qui intègrent notamment des architectures clients-serveurs et des réseaux locaux intégrés, rend de plus en plus difficile une gestion efficace de la qualité de service au sein de ces systèmes. D'une part, les administrateurs et responsables de ces systèmes d'information sont amenés à adopter une démarche de service à l'égard des utilisateurs et à opérer en tant que prestataires de service soucieux de la qualité des services fournis tout en étant confrontés à des réductions de coût d'exploitation, et d'autre part, les utilisateurs de ces services réclament des niveaux de qualité de service toujours plus élevés.

La maîtrise de la qualité de service implique un système fiable de remontée des informations pertinentes en provenance des différentes ressources du système d'information. Il est cependant ardu d'exploiter des gisements de données de performance de grand volume résidant dans les équipements d'un réseau, dans les systèmes et dans les applications logicielles, de consolider ces données, puis de les restituer sous forme de tableaux de bord synthétiques à des fins de gestion de capacité ou de qualité de service. Il est recherché, d'une part, une gestion de la qualité de service au niveau de l'utilisateur: disponibilité, temps de réponse applicatif, réactivité face à un incident d'un support technique, et d'autre part, une gestion de la qualité de service technique relative à l'infrastructure elle-même: trafic, temps de transit réseau, consommation en temps d'unité centrale, etc.

Par ailleurs, il existe de nombreux systèmes d'exploitation différents. Pour pouvoir gérer le plus grand nombre de ressources, on est parfois amené à élaborer une application dédiée à chaque système d'exploitation. Ces applications ayant pour but de permettre la communication entre la ressource à gérer (serveur cible) et le serveur de gestion distant. Dans ce sens, on connaît par exemple l'application Patrol de BMC Software® qui nécessite d'être installée, configurée et administrée dans le serveur cible. Cela constitue une contrainte non négligeable et peut présenter des risques d'incompatibilité ou du moins de perturbation du système d'exploitation du serveur cible. Une telle implémentation ne présente pas des garanties de stabilité maximum.

On connaît également l'agent SNMP (« Simple Network Management Protocol ») permettant l'administration distante ou locale sur des réseaux de type Internet. Malheureusement, cette application n'est pas adaptée pour réaliser la mesure des performances et ne peut pas facilement être étendue sans la modification du code source.

La présente invention vise à pallier les inconvénients ci-dessus en proposant un nouveau procédé pour remonter des informations pertinentes depuis un serveur distant.

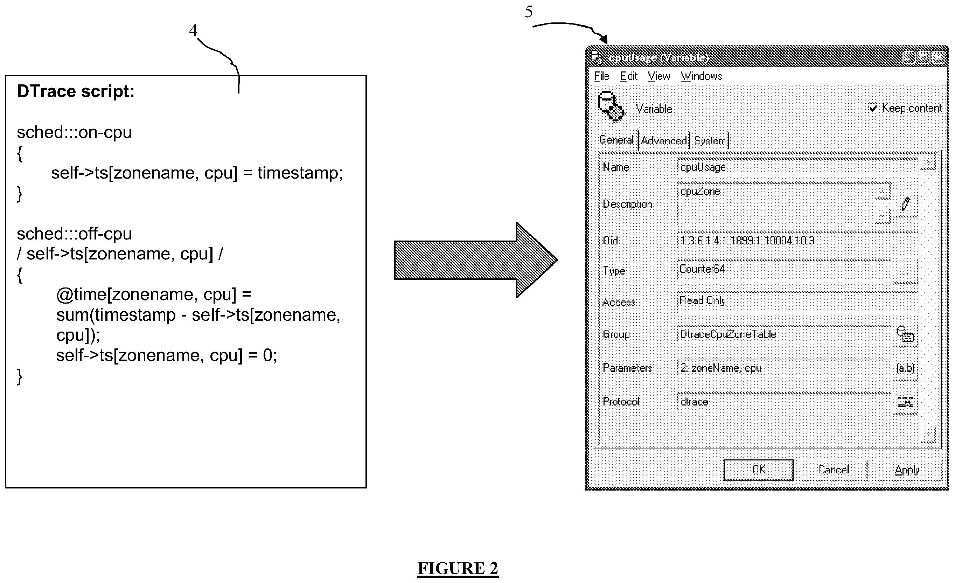

On connaît également le document WO 00/75814 décrivant un système dans lequel un serveur est apte à transmettre des profils vers une application locale de surveillance. Il s'agit d'un système client-serveur comprenant un serveur « server computer 14 » et un client « client monitoring module 32 » sur la figure 2 notamment. Le composant client est donc un outil dédié aux échanges avec le serveur 14 associé et est apte à interagir avec le système d'exploitation de l'ordinateur client. Ce système est donc constitué de deux composants, le composant serveur disposé dans un serveur distant et le composant client que l'on vient installer dans l'ordinateur de l'utilisateur pour récupérer des données de surveillance e les transmettre vers le serveur distant.

La présente invention a pour but un procédé simple à mettre en oeuvre pour récupérer des données de performance dans un serveur cible donné.

Un autre but de l'invention est de proposer un procédé stable de récupération de données dans un serveur cible sans perturber le système d'exploitation de ce serveur cible.

On atteint au moins l'un des objectifs précités avec un procédé selon la revendication 1

L'outil de suivi dynamique est également appelé outil de trace dynamique.

Avec le procédé selon l'invention on utilise avantageusement l'outil de suivi dynamique déjà présent dans le serveur cible. Généralement, un tel outil de suivi dynamique est pré-intégré au système d'exploitation du serveur cible. Il est donc complètement compatible avec ce système d'exploitation. Ainsi, il n'est pas nécessaire de développer et installer un nouvel outil de récupération de données de performances au sein du serveur cible. On accède à cet outil à distance depuis un serveur de gestion. La présente invention est donc remarquable par sa simplicité de mise en oeuvre. Les données de performances sont donc prélevées de façon automatique par le script, et le serveur de gestion récupère ces données de performance régulièrement de façon automatique.

En pratique, les scripts sont élaborés au sein de ce serveur de gestion et les données de performance récupérées peuvent servir de variables à un logiciel de gestion de performances au sein du serveur de gestion.

L'outil de suivi dynamique exécute les scripts provenant du serveur de gestion comme tout autre script, notamment en prélevant des données dans le serveur cible en fonction des sondes prédéfinies. Ces sondes sont des points de mesures prédéterminés dans le serveur cible.

Lesdites données relatives au comportement du système d'exploitation et des applications contiennent les données de performances (« hardware » et « software » notamment) que l'on cherche à rapatrier dans le serveur de gestion.
- Selon une caractéristique avantageuse de l'invention, l'outil de suivi dynamique est le module DTrace qui est une structure complète de suivi dynamique intégrée dans Solaris™ 10 ou supérieur. Cet outil de suivi dynamique permet aux administrateurs et aux développeurs travaillant sur des systèmes de production en activité de surveiller le comportement des programmes utilisateurs et du système d'exploitation lui-même. Habituellement, on utilise DTrace en local et de façon ponctuelle. Pour ce faire, selon l'art antérieur, on saisit usuellement le script sur une ligne de commande au moyen d'un éditeur de texte en temps réel de façon à interroger quelques points de mesure, puis on récupère le résultat immédiatement après l'exécution du script.

Au contraire dans la présente invention, le script est pré-élaboré à distance au sein d'un serveur de gestion, ce script est envoyé une seule fois pour toute vers le module DTrace qui l'exécute régulièrement et stocke successivement les résultats qui seront régulièrement récupérés par le serveur de gestion. Dans la technologie Sun par exemple, DTrace est un module du conteneur d'agent commun (« common agent container » en anglais) que l'on nommera pour la suite cacao.

Plus précisément, lorsqu'on utilise le module DTrace, le script est défini au sein d'un consommateur ou « consumer » qui est une enveloppe permettant de véhiculer le script depuis le serveur de gestion jusqu'au serveur cible.

En fait DTrace est une technologie développée par SUN pour son système d'exploitation Solaris™. Les sondes sont donc prédéfinies de manières très précises. Comme la présente invention peut utiliser DTrace pour exécuter des scripts, ceci procure à la présente invention une grande stabilité et une grande précision dans l'acquisition de données de performance. Par ailleurs, DTrace a été conçu pour fonctionner dans le noyau système. Il consomme donc peu de mémoire et de CPU. La présente invention est donc très économe en terme de consommation mémoire et CPU.

Selon un mode de mise en oeuvre avantageux de l'invention, on utilise des sondes spécifiques permettant l'acquisition de données de performance relatives à :
- la consommation mémoire,
- l'activité du processeur, et
- l'activité des disques, c'est-à-dire l'écriture et la lecture notamment.

D'autres paramètres liés aux ressources systèmes ou à des applicatives peuvent également être acquis en utilisant des sondes adéquates.

Ces données de performances système constituent parfois ce que l'on nomme par KPI, pour « Key Performance Indicator ».

De préférence, on accède au serveur cible au moyen d'un protocole dédié. Dans le cadre de DTrace dans une machine Solaris™, on peut accéder à l'agent Cacao du serveur cible au moyen du protocole JMX.

Selon une caractéristique avantageuse de l'invention, on envoie en même temps que le script, des paramètres de durée de vie dudit script à exécuter. Avantageusement, contrairement à l'utilisation ponctuelle usuelle de DTrace notamment, le procédé selon l'invention affecte à chaque script une durée de vie donnée qui peut être de quelques heures ou quelques années. En effet, habituellement, un script est exécuté puis détruit à la fin de son exécution ponctuelle. Avec la présente invention, le script devient quasiment permanent. En particulier, on peut envoyer un paramètre de durée de vie infinie de façon à ce que l'outil de suivi dynamique exécute le script de manière continue.

De préférence, à l'étape de la télétransmission, on sauvegarde le script dans la mémoire vive du serveur cible.

De la même manière, les résultats générés par l'outil de suivi dynamique peuvent également être sauvegardés dans la mémoire vive du serveur cible et non pas sur le disque du serveur cible. Ainsi, au moment de la récupération des données de performance, le serveur de gestion accède directement à la mémoire vive sans contacter l'outil de suivi dynamique.

Avantageusement, pour améliorer la souplesse du procédé, le script transmis peut être un script générique que l'on transmet ensemble avec un paramètre spécifique. En effet, on peut éditer des scripts spécifiques destinés à contrôler une application ou autre. Mais on peut aussi de préférence éditer des scripts génériques. A ces scripts génériques on associe un ou plusieurs paramètres , par exemple le nom de l'application à contrôler. Ainsi, pour contrôler plusieurs applications, on peut envoyer plusieurs scripts génériques mais à chaque fois avec un ou plusieurs paramètres (le nom de l'application ciblée) différents.

D'autres avantages et caractéristiques de l'invention apparaîtront à l'examen de la description détaillée d'un mode de mise en oeuvre nullement limitatif, et des dessins annexés, sur lesquels :
La figure 1 est une vue générale d'un système mettant en oeuvre un procédé selon la présente invention, et
La figure 2 illustre un exemple de script et sa correspondance en tant que variable pour une application de mesure des performances et de suivi de qualité de service au sein d'un serveur de gestion.

Bien que l'invention n'y soit pas limitée on va maintenant décrire le procédé selon l'invention pour la récupération de données de performance au sein d'un serveur cible 1 ayant comme système d'exploitation Solaris™ 10u4 avec DTrace comme outil de suivi dynamique.

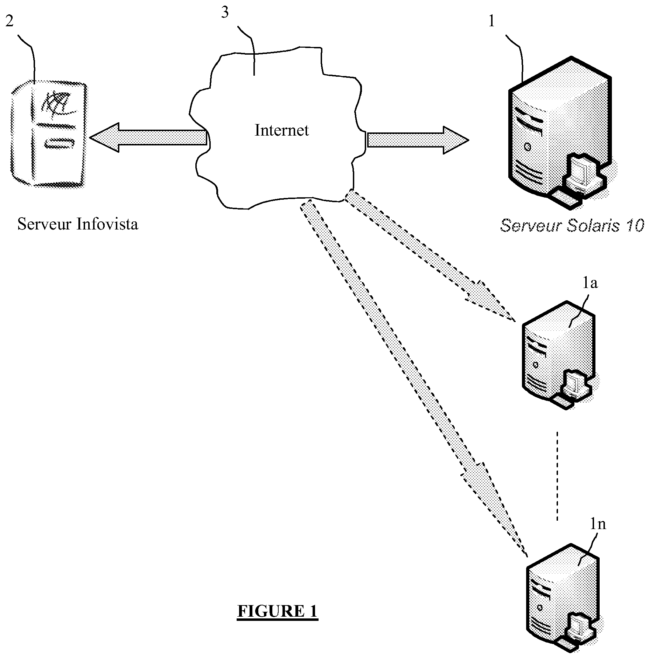

Sur la figure 1 on voit le serveur cible 1 pour lequel on souhaite mesurer de façon permanente les performances et la qualité. D'autres serveurs cibles la-ln peuvent également être contrôlés. Le serveur de gestion 2 est de type Infovista Server® prévu pour gérer la performance et la qualité de service des serveurs cibles.

Ce serveur de gestion 2 est relié aux serveurs cibles via un réseau de communication 3 tel que le réseau Internet ou un réseau local.

Le procédé selon la présente invention peut se dérouler de la manière suivante.

Un script est élaboré au sein du serveur de gestion 2. Ce script est envoyé via le réseau 3 vers le module DTrace de l'agent Cacao contenu dans le serveur cible 1. Le module DTrace réceptionne le script et l'exécute. Cette exécution est fonction de la durée de vie spécifiée dans l'envoi du script. Cette durée de vie peut être de plusieurs années. DTrace exécute de façon régulière le script et stocke les résultats dans un espace mémoire bien défini. Périodiquement, le serveur de gestion vient récupérer les résultats ainsi stockés. Ces résultats renferment des données de performance et de qualité du serveur cible. Ces données de performance proviennent des sondes prédéfinies dans le module DTrace mais activées par le script. On peut ainsi mesurer de façon périodique :
- la consommation mémoire,
- l'activité du processeur, et
- l'activité des disques.

Un premier exemple de script est donné en annexe. Ce script a pour fonction de mesurer la consommation CPU d'un système.

Avantageusement, dans le serveur cible 1, Solaris™ 10u4 intègre en son sein un programme démon nommé Cacao et supportant des protocoles de gestion standards tels que JMX, SNMP ou autres, et intégrant des modèles de sécurité. Ce programme Cacao permet la communication entre le serveur de gestion 2 distant et DTrace logé dans le serveur cible 1. L'homme du métier comprendra aisément que d'autres applications de communication sécurisée peuvent être utilisées pour permettre l'accès à un outil de suivi dynamique contenu dans un serveur cible depuis un serveur distant.

Le serveur de gestion comporte une application java apte à sonder le serveur cible 1. Cette application java utilise le protocole JMX pour communiquer avec le serveur cible 1. L'accès au serveur cible nécessite de préférence la saisie d'un login, d'un mot de passe, de l'adresse IP du serveur cible et d'un port de communication.

Lorsque le serveur de gestion est en charge de plusieurs serveurs cibles, il envoie un script pour chaque serveur cible, puis de façon automatique et régulière, il scrute chaque serveur cible afin de rapatrier des données de performance prélevées par chaque outil de suivi dynamique de chaque serveur cible.

Sur la figure 2 on voit un exemple de script 4 qui sera envoyé sous forme de « consumer » vers le module DTrace du serveur cible. Le terme « consumer » est le terme utilisé pour définir des scripts dans le module. En fait, dans le serveur de gestion, on édite les scripts et on les envoie en tant que « consumer » éventuellement spécifié dans un en-tête du message contenant le script lors de l'envoi. Le « consumer » est comme une enveloppe dans laquelle on place un script et des éléments associés tels que notamment la durée de vie, un paramètre spécifique s'il s'agit d'un script générique,...

Le script 4 peut avantageusement constituer une variable pour une application de gestion de performance telle que Infovista Server. Cette variable peut être représentée conformément à la fenêtre 5 illustrée sur la figure 2.

Bien sûr, l'invention n'est pas limitée aux exemples qui viennent d'être décrits et de nombreux aménagements peuvent être apportés à ces exemples sans sortir du cadre de l'invention.

### ANNEXE

```
 dtrace::: BEGIN
 {
      cpustart[cpu] = 0; }
 /* Flag this thread as idle */
 sysinfo:unix:idle_enter:idlethread
 {
      idle[cpu] = 1; }
 /* Save kernel time between running threads */
 sched:::on-cpu
 /cpustart[cpu]/
 {
      this->elapsed = timestamp - cpustart[cpu];
      @Procs["KERNEL"] = sum(this->elapsed); }
 /* Save the elapsed time of a thread */
 sched:::off-cpu,
 sched:::remain-cpu,
 profile:::profile-1sec
 /cpustart[cpu]/
 {
      /* determine the name for this thread */
      program[cpu] = pid == 0 ? idle[cpu] ? "IDLE" : "KERNEL" :
      execname;
 }
      /* save elapsed */
      this->elapsed = timestamp - cpustart[cpu];
      @Procs[program[cpu]] = sum(this->elapsed);
      cpustart[cpu] = timestamp; }
 /* Record the start time of a thread */
 sched:::on-cpu,
 sched:::remain-cpu
 {
      idle[cpu] = 0;
      cpustart[cpu] = timestamp; }
```

## Revendications

1. Procédé de mesure des performances d'au moins un serveur cible (1, 1a,...,1n) logeant un composant client qui peut être commandé par des scripts, ce composant client comprenant des sondes prédéfinies pour acquérir des données relatives au comportement d'un système d'exploitation et d'applications dudit serveur cible,
ce procédé comprenant les étapes suivantes, depuis un serveur de gestion (2) distant :
- on accède via un réseau de communication (3) au composant client au sein du serveur cible,
- on télétransmet au moins un script (4) devant être exécuté par ce composant client, et
- à des instants prédéterminés, on accède de façon automatique au serveur cible de façon à récupérer des données de performance résultant de l'exécution dudit script par le composant client
**caractérisé en ce que** ce composant client est le module DTrace, un outil de suivi dynamique pré-intégré au système d'exploitation du serveur cible (1, 1a,...1n), et **en ce qu'**on envoie en même temps que le script (4), des paramètres de durée de vie dudit script à exécuter.

2. Procédé selon la revendication 1, **caractérisé en ce qu'**on utilise des sondes spécifiques permettant l'acquisition de données de performance relatives à :
- la consommation mémoire,
- l'activité du processeur, et
- l'activité des disques.

3. Procédé selon l'une quelconque des revendications précédentes, **caractérisé en ce qu'**on accède au serveur cible (1, 1a,...,1n) au moyen d'un protocole dédié.

4. Procédé selon l'une quelconque des revendications précédentes, **caractérisé en ce qu'**on accède au serveur cible (1, 1a,...,1n) au moyen du protocole JMX.

5. Procédé selon la revendication 4, **caractérisé en ce qu'**on envoie un paramètre de durée de vie infinie de façon à ce que l'outil de suivi dynamique exécute le script de manière continue.

6. Procédé selon l'une quelconque des revendications précédentes, **caractérisé en ce qu'**à l'étape de la télétransmission, on sauvegarde ce script dans la mémoire vive du serveur cible (1, 1a,...,1n).

7. Procédé selon l'une quelconque des revendications précédentes, **caractérisé en ce que** les résultats générés par l'outil de suivi dynamique sont sauvegardés dans la mémoire vive du serveur cible (1, 1a,...,1n).

8. Procédé selon l'une quelconque des revendications précédentes, **caractérisé en ce que** le script transmis est un script générique que l'on transmet ensemble avec un paramètre spécifique.

## Patentansprüche

1. Verfahren zur Messung der Leistungen mindestens eines Zielservers (1, 1a, ..., 1n), in welchem eine durch Skripts steuerbare Clientkomponente aufgenommen ist, wobei die Clientkomponente zur Gewinnung von Daten über das Verhalten eines Betriebs- und Anwendungssystems des Zielservers vorbestimmte Sonden umfasst,
wobei das Verfahren die folgenden Schritte von einem entfernten Verwaltungsserver aus (2) umfasst:
- Zugriff auf die Clientkomponente innerhalb des Zielservers über ein Kommunikationsnetz (3),
- Fernübertragung mindestens eines durch die Clientkomponente auszuführenden Skripts (4), und
- zu vorbestimmten Zeitpunkten automatischer Zugriff auf den Zielserver, sodass Leistungsdaten aus der Ausführung des Skripts durch die Clientkomponente zurückgewonnen werden können,
**dadurch gekennzeichnet, dass** die Clientkomponente das DTrace Modul, ein im Betriebssystem des Zielservers (1, 1a, ..., 1n) vorintegriertes Werkzeug zur dynamischen Verfolgung ist, und dadurch, dass zeitgleich mit dem Skript (4) Parameter für die Lebensdauer des auszuführenden Skripts gesendet werden.

2. Verfahren nach Anspruch 1, **dadurch gekennzeichnet, dass** spezifische Sonden eingesetzt werden, welche die Gewinnung von Leistungsdaten ermöglichen, und zwar bezüglich:
- des Speicherverbrauchs,
- der Aktivität des Prozessors, und
- der Aktivität der Festplatten.

3. Verfahren nach einem der vorhergehenden Ansprüche, **dadurch gekennzeichnet, dass** der Zugriff auf den Zielserver (1, 1a, ..., 1n) über ein dediziertes Protokoll erfolgt.

4. Verfahren nach einem der vorhergehenden Ansprüche, **dadurch gekennzeichnet, dass** der Zugriff auf den Zielserver (1, 1a, ..., 1n) über das JMX Protokoll erfolgt.

5. Verfahren nach Anspruch 4, **dadurch gekennzeichnet, dass** ein Parameter für die unendliche Lebensdauer derart gesendet wird, sodass das Werkzeug zur dynamischen Verfolgung das Skript kontinuierlich ausführt.

6. Verfahren nach einem der vorhergehenden Ansprüche, **dadurch gekennzeichnet, dass** bei dem Schritt der Fernübertragung das Skript im Arbeitsspeicher des Zielservers (1, 1a, ..., 1n) gesichert wird.

7. Verfahren nach einem der vorhergehenden Ansprüche, **dadurch gekennzeichnet, dass** die durch das Werkzeug zur dynamischen Verfolgung erzeugten Ergebnisse im Arbeitsspeicher des Zielservers (1, 1a, ..., 1n) gesichert werden.

8. Verfahren nach einem der vorhergehenden Ansprüche, **dadurch gekennzeichnet, dass** das übertragene Skript ein generisches Skript ist, das zusammen mit einem spezifischen Parameter übertragen wird.

## Claims

1. Method for measuring the performance of at least one target server (1, 1a,...,1n) housing a client component which can be controlled by scripts, this client component comprising predefined probes for acquiring the data relating to the behaviour of an operating system and applications of said target server,
this method comprising, from a remote management server (2), the following steps:
- a client component within the target server is accessed via a communication network (3),
- at least one script (4) to be executed by this client component is remotely transmitted, and
- at predetermined times, the target server is automatically accessed so as to retrieve the performance data resulting from the execution of said script by the client component,
characterized this client component is the Dtrace module, a dynamic monitoring tool pre-integrated with the operating system of the target server (1, 1a,...1n), and in that the same time as the script (4), parameters relating to the lifetime of said script to be executed are sent.

2. Method according to claim 1, **characterized in that** specific probes are used allowing the acquisition of performance data relating to:
- memory usage,
- processor activity, and
- disk activity.

3. Method according to any one of the previous claims, **characterized in that** the target server (1, 1a,...1n) is accessed using a dedicated protocol.

4. Method according to any one of the previous claims, **characterized in that** the target server (1, 1a,...1n) is accessed using the JMX protocol.

5. Method according to claim 4, **characterized in that** an infinite lifetime parameter is sent so that the dynamic monitoring tool executes the script continuously.

6. Method according to any one of the previous claims, **characterized in that** at the remote transmission step, this script is saved in the random access memory of the target server (1, 1a,...1n).

7. Method according to any one of the previous claims, **characterized in that** the results generated by the dynamic monitoring tool are saved in the random access memory of the target server (1, 1a,...1n).

8. Method according to any one of the previous claims, **characterized in that** the script transmitted is a generic script that is transmitted together with a specific parameter.
